# EUROPÄISCHE PATENTSCHRIFT

(11) **EP 3 727 955 B1**
(45) Veröffentlichungstag und Bekanntmachung des Hinweises auf die Patenterteilung: **27.04.2022**
(21) Anmeldenummer: 18829807.9
(22) Anmeldetag: 18.12.2018
(51) Int. Cl.: B60S 1/34, B60S 1/52

(54) **ANORDNUNG VON DÜSENEINHEITEN FÜR EINEN WISCHERARM, WISCHERARM UND VERWENDUNG EINER DÜSENEINHEIT**
ARRANGEMENT OF NOZZLE UNITS FOR A WIPER ARM, WIPER ARM AND USE OF A NOZZLE UNIT
ENSEMBLE D'UNITÉS À BUSE POUR UN BRAS D'ESSUIE-GLACE, BRAS D'ESSUIE-GLACE ET UTILISATION D'UNE UNITÉ À BUSE

(30) Priorität: 22.12.2017 DE 102017012038
(43) Veröffentlichungstag der Anmeldung: 28.10.2020
(73) Patentinhaber: A. Raymond et Cie, 38000 Grenoble (FR)
(72) Erfinder: ZIMMER, Jochen, 79733 Görwihl (DE); FEGER, Axel, 79540 Lörrach (DE)
(74) Vertreter: Tilmann, Max Wilhelm
(86) Internationale Anmeldenummer: PCT/EP2018/085529
(87) Internationale Veröffentlichungsnummer: WO 2019/121704

(56) Entgegenhaltungen:
- EP-A1- 3 230 133
- EP-B1- 3 230 133
- WO-A1-99/28171
- WO-A1-2018/068892
- DE-A1-102014 220 418
- DE-A1-102015 210 746
- DE-A1-102015 215 932
- FR-A1- 3 007 364

## Beschreibung

Die Erfindung betrifft eine Anordnung von Düseneinheiten für einen Wischerarm. Ferner betrifft die Erfindung einen Wischerarm und eine Verwendung einer Düseneinheit zur Befestigung an einer Fläche eines Wischerarms sowie eine Düseneinheit.

Es ist ein Wischerarm bekannt, in dem ein perforierter Schlauch angeordnet ist, wobei die Löcher im Schlauch als Düsen dienen, um eine durch den Schlauch strömende Flüssigkeit auf eine Autoscheibe zu applizieren. Nachteilig hieran ist allerdings, dass die Löcher wegen der elastischen Eigenschaft des Schlauchs nur unter einem breiten Toleranzbereich gefertigt werden können. Zudem werden die Löcher gelasert und der Schlauch und damit die Löcher können unter Druck größer werden. Des Weiteren kann sich der Schlauch wegen seines elastischen Verhaltens beim Verbau oder im Betrieb verdrehen, sodass die Düsen nicht mehr die gewünschte Ausrichtung besitzen. Diese Nachteile führen insgesamt dazu, dass die Flüssigkeit nicht mit der für die Reinigung erforderliche Strahldicke, Reichweite und Zielgenauigkeit auf die Autoscheibe appliziert wird.

Aus der Offenlegungsschrift DE 10 2015 210 746 A1 ist ein Wischarm bekannt, in dem statt eines Schlauchs eine Anordnung aus zwei Rohren, die durch einen rohrförmigen Verbindungsstutzen aus hartem Kunststoff miteinander gelenkig verbunden sind, verwendet wird. In einer Ausführungsform haben sowohl der Verbindungsstutzen als auch jedes Rohr eine Perforation, um Flüssigkeit auf eine Scheibe zu applizieren. Allerdings weist die Anordnung aus Rohren und Verbindungsstutzen keine Verdrehsicherung auf, sodass sich während des Betriebs, insbesondere infolge der Dynamik des Wischarms oder beim Tausch des Wischblatts, die Ausrichtung der Perforation ändert.

Aus der Offenlegungsschrift DE 10 2014 205 538 A1 ist eine Düseneinheit bekannt. Sie weist eine ebene Fläche auf, die grundsätzlich geeignet ist, die Düseneinheit daran zu hindern, sich um ihre Längsachse zu drehen, wenn die ebene Fläche an einer Fläche eines Wischerarms anliegt. Allerdings erfolgt die Verbindung zwischen Düseneinheit und Wischerarm nicht mittels der besagten Fläche, sondern durch Rasten. Im montierten Zustand befindet sich die Düseneinheit an einer äußeren Seite des Wischerarms.

DE 10 2014 220 418 A1 betrifft einen Wischerarm. Der Wischerarm umfasst einen Armhauptkörper; einen ersten Düsenabschnitt, welcher an einer ersten vorherbestimmten Position in einer Längsrichtung von dem Armhauptkörper vorgesehen ist; einen zweiten Düsenabschnitt, welcher an einer zweiten vorherbestimmten Position in der Längsrichtung des Armhauptkörpers vorgesehen ist und welcher eine Waschflüssigkeit in Richtung zu einer Position ausstößt, die von einem Beaufschlagungspunkt von der Waschflüssigkeit, welche von dem ersten Düsenabschnitt ausgestoßen wird, verschieden ist; einen ersten Leitungsschlauch, welcher in dem Armhauptkörper aufgenommen ist und welcher mit dem ersten Düsenabschnitt verbunden ist; einen zweiten Leitungsschlauch, welcher in dem Armhauptkörper Seite an Seite zu dem ersten Leitungsschlauch aufgenommen ist und welcher mit dem zweiten Düsenabschnitt verbunden ist; und eine Schlauchhalteeinheit, welche an dem Armhauptkörper angebracht ist und welche aufweist: einen ersten Schlauchhalteabschnitt, welcher den ersten Leitungsschlauch hält; und einen zweiten Schlauchhalteabschnitt, welcher integral mit dem ersten Schlauchhalteabschnitt vorgesehen ist und welcher den zweiten Leitungsschlauch hält.

DE 10 2015 210 746 A1 betrifft einen Wischarm, der wenigstens ein erstes Rohr, welches im Wischarm angeordnet ist, umfasst, wobei das erste Rohr einen Flüssigkeitstransport dient, sodass Flüssigkeit von dem ersten Rohr über ein zweites Rohr zu wenigstens einer Spritzdüse leitbar ist, wobei aus der Spritzdüse die Flüssigkeit austritt, wobei das erste und das zweite Rohr durch einen Verbindungsstutzen miteinander verbunden sind, wobei der Verbindungsstutzen ein Gelenkelement aufweist, welches vorzugsweise einstückig mit dem Verbindungsstutzen ausgebildet ist.

WO 99/28171 A1 betrifft eine Düsenanordnung, sowie einen Scheibenwischerarm zum Aufnehmen der Düsenanordnung. Die Düsenanordnung weist eine Zuführeinrichtung für eine Waschflüssigkeit auf, die mit mindestens einem ersten Düsenkörper verbunden und im Wischerarm des Scheibenwischers anordenbar ist.

EP 3 230 133 A1 betrifft eine Wischarmvorrichtung mit einer Waschwasserdüse. FR 3 007 364 A1 betrifft eine Wischvorrichtung und DE 10 2015 215 932 A1 ein Düsensystem zum Reinigen einer Scheibe.

Vor diesem Hintergrund ist Aufgabe der vorliegenden Erfindung, eine gattungsgemäße Anordnung derart zu verbessern, dass die Zielgenauigkeit und die Qualität der Applikation von einer Flüssigkeit auf eine Autoscheibe erhöht werden.

Diese Aufgabe wird durch die Anordnung gemäß Anspruch 1, den Wischerarm gemäß Anspruch 11, die Verwendung gemäß Anspruch 14 sowie die Düseneinheit gemäß Anspruch 15 gelöst.

Die Erfindung geht von dem Grundgedanken aus, die Düseneinheit derart zu gestalten, dass sie in der Lage ist, durch einen einfachen Formschluss mit dem Wischerarm eine Drehung um ihre Längsachse zu verhindern. Die Bereitstellung einer ebenen Anlagefläche erleichtert die Montage und sorgt dafür, dass die Düsenausrichtung sich nach der Montage nicht ungewollt ändert. Damit wird die Zielgenauigkeit, mit der die Flüssigkeit auf die Scheibe appliziert wird, dauerhaft beibehalten.

Erfindungsgemäß ist die Düseneinheit als starrer Körper ausgebildet. Dadurch kann die Düse mit einer höheren Fertigungsgenauigkeit in die Düseneinheit eingearbeitet werden als dies bei einem Schlauch der oben genannten Art der Fall ist. Zudem verformt sich die Düseneinheit nicht mit der Folge, dass sich die Ausrichtung der Düse ändert. Üblicherweise weist der starre Körper mehr Material als die Schlauchwand auf, sodass der starre Körper bessere Bedingungen schafft, eine größere Anzahl verschiedener Düsenformen in ihn einzuarbeiten. Außerdem kann die erfindungsgemäße Düseneinheit als Spritzgussteil hergestellt werden, was wiederum gegenüber einem extrudierten Schlauch die geometrische Freiheit erhöht. So kann mit der erfindungsgemäßen Düseneinheit im Bereich des Düsenaustritts fast jede Geometrie realisieren werden, ohne dass dafür beispielsweise die gesamte Wandstärke aufgedickt werden muss (was auf die Zykluszeit beim Spritzgießen gehen würde). Diese Vorzüge führen dazu, dass mit der erfindungsgemäßen Anordnung die Zielgenauigkeit und die Qualität des Applizierens einer Flüssigkeit auf einer Autoscheibe erhöht werden. gegenüber einem extrudierten Schlauch die geometrische Freiheit erhöht. So kann mit der erfindungsgemäßen Düseneinheit im Bereich des Düsenaustritts fast jede Geometrie realisieren werden, ohne dass dafür beispielsweise die gesamte Wandstärke aufgedickt werden muss (was auf die Zykluszeit beim Spritzgießen gehen würde). Diese Vorzüge führen dazu, dass mit der erfindungsgemäßen Anordnung die Zielgenauigkeit und die Qualität des Applizierens einer Flüssigkeit auf einer Autoscheibe erhöht werden.

Der starre Körper kann aus verschiedenen geeigneten Werkstoffen oder Werkstoffkombinationen bestehen. Geeignet sind die Werkstoffe oder Werkstoffkombinationen insbesondere, wenn sie die starre Eigenschaft des Körpers gewährleisten können. Dafür kommen nicht nur Metalle in Frage, sondern auch Kunststoffe, insbesondere thermoplastische Kunststoffe. Ein geeigneter thermoplastischer Kunststoff ist Polyoxymethylen (POM).

Erfindungsgemäß weist die Düseneinheit einen Kanal auf, durch den Flüssigkeit in die Düseneinheit einströmen und/oder aus der Düseneinheit ausströmen kann. Der Kanal ist also eine Ausnehmung innerhalb der Düseneinheit. Der Kanal kann mit Hilfe der gleichen Fertigungsverfahren hergestellt werden wie die Düse (s. u.), insbesondere durch Spritzgießen gleichzeitig mit dem starren Körper und der Düse gefertigt werden. Düseneinheiten, die in der Reihe zwischen zwei weiteren Düseneinheiten angeordnet sind, weisen praktischerweise einen Kanal auf, durch den Flüssigkeit in die Düseneinheit einströmen und aus der Düseneinheit ausströmen kann. Düseneinheiten, die den Abschluss der Reihe bilden, weisen praktischerweise einen Kanal auf, durch den Flüssigkeit nur in die Düseneinheit einströmen, aber nicht über den Kanal sondern über die Düse aus der Düseneinheit ausströmen kann. Einen Abschluss der Reihe bildet eine Düseneinheit dann, wenn sie dazu bestimmt ist, die Flüssigkeit ausschließlich über die Düse austreten zu lassen, nicht aber an eine andere Düseneinheit, einen Schlauch oder dergleichen weiterzuleiten.

Eine Düseneinheit, die den Abschluss einer Reihe bildet, kann beispielsweise nach der Art ausgeführt werden, wie sie in den Fig. 5 bis 9 der DE 10 2015 015 553 A1 gezeigt sind.

Erfindungsgemäß weist die Düseneinheit eine Düse auf, die mit dem Kanal verbunden ist. "Verbunden" meint in diesem Kontext, dass Flüssigkeit vom Kanal zur Düse geleitet werden kann. Es ist denkbar, dass eine Düseneinheit nicht nur eine, sondern mehrere Düsen aufweist. Es gibt mehrere Möglichkeiten, die Düse zu fertigen. Eine Möglichkeit, den Düsenkörper und die Düse gleichzeitig zu fertigen, ist das Spritzgießen. Ein weiteres Beispiel ist die spanende Bearbeitung. Die Form der Düse beeinflusst insbesondere die Form, Geschwindigkeit und die Reichweite des Flüssigkeitsstrahls, wenn die Flüssigkeit aus der Düse austritt.

Erfindungsgemäß sind die Düseneinheiten derart in Reihe miteinander verbunden, dass eine Flüssigkeit von einer Düseneinheit in eine nach der Reihe folgende Düseneinheit fließen kann

Im Sinne der Erfindung bezeichnet "nach der Reihe folgende" die Eigenschaft einer Düseneinheit, in Bezug zu einer referenzierten Düseneinheit derart angeordnet zu sein, dass zwischen diesen Düseneinheiten in der Reihe keine dritte Düseneinheit angeordnet ist.

Damit eine Flüssigkeit von einer Düseneinheit in eine nach der Reihe folgende Düseneinheit fließen kann, müssen diese Düseneinheiten derart miteinander verbunden sein, dass ihre Kanäle miteinander verbunden sind. Das ist der Fall, wenn ihre Kanäle unmittelbar aneinander anschließen, sodass die Flüssigkeit, die aus dem einen Kanal ausströmt, unmittelbar in den anderen Kanal einströmt. Alternativ ist das auch dann der Fall, wenn ihre Kanäle über eine Zwischenleitung wie z. B. einem Schlauchsegment miteinander verbunden sind, so dass die Flüssigkeit, von einem Kanal zum anderen über die Zwischenleitung strömt.

Erfindungsgemäß weist mindestens eine Düseneinheit eine Anlagefläche auf, die derart ausgebildet ist, dass sich diese Düseneinheit nicht um ihre Längsachse drehen kann, wenn die Anlagefläche an einer Fläche eines Wischerarms anliegt.

Vorzugsweise ist die Anlagefläche eben ausgebildet. Vorteilhafterweise liegt die Anlagefläche parallel zur Längsachse der Düseneinheit. Besonders wirkungsvoll wird die Drehung der Düseneinheit um ihre Längsachse verhindert, wenn auch die Fläche des Wischerarms eben oder im Wesentlichen eben (z. B. leicht gekrümmt) ist.

In einer bevorzugten Ausführungsform ist die Anlagefläche eben ausgebildet und erstreckt sich die Anlagefläche parallel zur Längsachse, wobei die Länge der Anlagefläche in Richtung der Längsachse mindestens 30%, insbesondere bevorzugt mindestens 40%, insbesondere bevorzugt mindestens 50%, insbesondere bevorzugt mindestens 60%, insbesondere bevorzugt mindestens 70% der Längserstreckung der Düseneinheit entspricht.

In einer bevorzugten Ausführungsform ist die Anlagefläche eben ausgebildet und so ausgebildet, dass sie eine erste Seite und eine der ersten Seite gegenüberliegende zweite Seite hat, die parallel zur ersten Seite ausgeführt ist. Insbesondere bevorzugt ist die Anlagefläche rechteckig ausgeführt. Die Anlagefläche kann an einer Seite tangential in einen gebogenen Oberflächenabschnitt der Düseneinheit übergehen. Die Anlagefläche kann über eine Kante in einen an die Anlagefläche angrenzenden, ebenfalls eben ausgeführten Oberflächenabschnitt der Düseneinheit übergehen. In einer bevorzugten Ausführungsform ist in dem eben ausgeführten Oberflächenabschnitt der Düseneinheit, in den die Anlagefläche mittels der Kante übergeht, eine Düse der Düseneinheit ausgeführt.

Bevorzugt weisen mehrere der Düseneinheiten, insbesondere bevorzugt die Mehrzahl der Düseneinheiten und ganz besonders alle Düseneinheiten eine erfindungsgemäße Anlagefläche auf, sodass die Ausrichtung aller Düsen dauerhaft beibehalten werden kann.

In einer bevorzugten Ausführungsform, bei der mehrere der Düseneinheiten eine Anlagefläche aufweisen, liegen die Anlageflächen der Mehrzahl der Düseneinheiten, die eine Anlagefläche aufweisen in einer Ebene, insbesondere bevorzugt liegen die Anlageflächen aller Düseneinheiten, die eine Anlagefläche aufweisen in einer Ebene,

Erfindungsgemäß sind die Düseneinheiten in Reihe miteinander verbunden, wobei der Begriff "verbunden" in diesem Kontext die alternativen Ausführungsformen umfasst, dass die Düseneinheiten entweder unmittelbar oder mittelbar miteinander verbunden sind. Die Düseneinheiten sind unmittelbar miteinander verbunden, wenn sie sich berühren. Sie sind mittelbar miteinander verbunden, wenn sie sich nicht berühren und über ein Mittelstück miteinander verbunden sind. Als Mittelstück kommt vorzugsweise ein Schlauchsegment in Betracht. Denkbar ist auch ein Rohr als Mittelstück. Nach einer möglichen Ausführungsform sind alle aufeinanderfolgenden Düseneinheiten über ein Mittelstück, insbesondere ein Schlauchsegment, miteinander verbunden.

Gemäß einer bevorzugten Ausführungsform sind zumindest zwei nach der Reihe aufeinanderfolgende Düseneinheiten gelenkig miteinander verbunden. Bevorzugt handelt es sich dabei um ein Scharniergelenk, besonders bevorzugt um ein Kugelgelenk. Dadurch erreicht die Anordnung eine Beweglichkeit, die es gestattet, die Anordnung an nicht ebene Flächen eines Wischerarms anzubringen.

Gemäß einer alternativen Ausführungsform sind zumindest zwei aufeinanderfolgende Düseneinheiten starr miteinander verbunden, d. h. sie weisen aufeinander bezogen keinen Freiheitsgrad auf. Denkbar ist auch, dass alle aufeinanderfolgenden Düseneinheiten starr miteinander verbunden sind.

Gemäß einer bevorzugten Ausführungsform weist eine der zwei Düseneinheiten ein elastisches Einfügestück und die andere ein starres hohles Gegenstück auf, wobei das Einfügestück dazu vorgesehen ist, in das starre hohle Gegenstück einzudringen, um dadurch die gelenkige Verbindung zu erreichen. Alternativ ist auch möglich, dass eine der zwei Düseneinheiten ein starres Einfügestück und die andere ein elastisches hohles Gegenstück aufweist, wobei das Einfügestück dazu vorgesehen ist, in das elastische hohle Gegenstück einzudringen, um dadurch die gelenkige Verbindung zu erreichen. Das elastische Einfügestück bzw. das elastische hohle Gegenstück besteht somit aus einem anderen Material als die Düseneinheit, da diese aus einem starre Körper ausgebildet ist. Somit besteht die Düseneinheit, die ein elastisches Einfügestück bzw. ein elastisches hohle Gegenstück aufweist, aus mindestens zwei Werkstoffen bzw. Werkstoffkombinationen, nämlich dem Werkstoff bzw. der Werkstoffkombination des starren Körpers und dem Werkstoff bzw. Werkstoffkombination des elastischen Eifügestücks bzw. des elastischen hohlen Gegenstücks.

Diese Ausführungsform ermöglicht eine einfache und schnelle Montage, indem das Einfügestück in das Gegenstück nur eingefügt zu werden braucht, ohne dass zusätzliche Befestigungsmittel wie Schrauben zum Einsatz kommen. Auch die Demontage kann einfach und schnell erfolgen, z. B. zu Reparatur- oder Austauschzwecke.

Die Verbindung kann beispielsweise durch eine Presspassung realisiert werden. Das Übermaß kann dabei durch elastisches Komprimieren (des Einfügestücks) oder Aufweiten (des hohlen Gegenstücks) des elastischen Stücks beim Einfügen erfolgen.

Gemäß einer vorteilhaften Ausführungsform weisen alle Düsen die gleiche Ausrichtung auf. Die "Ausrichtung" wird dabei durch die Position der Düsenachse in der Düseneinheit bestimmt. Welche Bezugselemente zur Bestimmung der Position der Düsenachse herangezogen werden können, hängt von der Form der Düseneinheit ab. Vorzugsweise dient die Längsachse der Düse als Bezugselement, wobei der Winkel zwischen dieser Längsachse und der Düsenachse ein Parameter der Position der Düsenachse ist. Ein weiteres Bezugselement kann die erfindungsgemäße Anlagefläche, die eben ist, sein, sodass der Winkel zwischen der Anlagefläche und der Düsenachse ein weiterer Parameter ist. Im Sinne der Erfindung weisen Düsen eine gleiche Ausrichtung auf, wenn ihre Düsenachsen parallel sind.

Gemäß einer bevorzugten Ausführungsform sind zumindest zwei Düsen unterschiedlich ausgerichtet. Dadurch kann beispielsweise ein Teil der Düsen ausgerichtet sein, um die Flüssigkeit oberhalb eines Wischerblattes zu applizieren und ein anderer Teil, um die Flüssigkeit unterhalb des Wischerblattes zu applizieren. Dies wäre beispielsweise mit zwei separat beschalteten, bzw. versorgten Strängen (Kanälen in der Düseneinheit) möglich, damit die beide Düsen nicht gleichzeitig sondern zeitlich versetzt zueinander spritzen können. Vorteilhafterweise können die Düsen des erstgenannten Teils bei der Aufwärtsbewegung des Wischerblattes betätigt werden, wohingegen die Düsen des letztgenannten Teils bei der Abwärtsbewegung des Wischerblattes betätigt werden. Damit können beispielsweise Windschutzscheiben schneller und gründlicher gereinigt und applizierter Scheibenreiniger sofort weggewischt werden, ohne die Sicht des Fahrers für eine längere Zeit zu behindert. Gemäß einer bevorzugten Ausführungsform weist zumindest eine Düseneinheit eine andere Form als eine andere Düseneinheit auf. Ebenso ist denkbar, dass zumindest eine Düseneinheit aus einem anderen Werkstoff oder einer anderen Werkstoffkombination als eine andere Düseneinheit besteht. Dadurch kann nach Bedarf eine Auswahl passender Düseneinheiten nach Art eines Baukastensystems erfolgen. Der Bedarf nach in Form und Werkstoff unterschiedlichen Düseneinheiten kann sich z. B. aus der Form des Wischerarms oder aus Komponenten, die an die Anordnung angeschlossen werden müssen, ergeben. So können einige Düseneinheiten beispielsweise zusätzliche Anschlusselemente aufweisen oder sich in ihrer Länge zu anderen Düseneinheiten unterscheiden, damit die gesamte Anordnung in den Wischerarm passt. Ebenso denkbar ist, dass eine Düseneinheit eine andere Düsengeometrie aufweist, als eine andere Düseneinheit. Die Düsenform kann beispielsweise rund, oval oder rechteckig sein.

Erfindungsgemäß weist zumindest eine Düseneinheit ein Leitersegment eines Leiters für eine Heizeinheit auf, wobei das Leitersegment mindestens einen Anschluss für ein anderes Leitersegment von einer anderen Düseneinheit aufweist. Die Heizeinheit dient insbesondere der Enteisung von Flüssigkeitsleitungen einer Scheibenwischanlage. Flüssigkeitsleitungen der erfindungsgemäßen Anordnung sind die Kanäle, Düsen und/oder Mittelstücke (z. B. Schlauchsegmente). Vorteilhafterweise ist das Leitersegment im Kanal der Düseneinheit angeordnet, sodass vereiste Flüssigkeit im Kanal unmittelbar mit dem Leitersegment in Kontakt steht und dadurch schnell auftaut. Das Leitersegment kann auch zusätzlich in der Düse angeordnet sein.

Der Begriff "anderes Leitersegment" umfasst insbesondere Leitersegmente anderer Düseneinheiten, die ihrerseits einen Anschluss für ein ihrerseits anderes Leitersegment aufweisen. Somit können zwei aufeinanderfolgende Düseneinheiten, die jeweils ein Leitersegment und einen Anschluss für ein anderes Leitersegment aufweisen, derart miteinander verbunden werden, dass über die Anschlüsse der Leitersegmente die Leitersegmente elektrisch verbunden werden.

Ein Leitersegment einer Düseneinheit, die in der Reihe zwischen zwei anderen Düseneinheiten angeordnet ist, weist zwei Anschlüsse auf, damit es mit den Leitersegmenten der benachbarten Düsenelemente elektrisch verbunden werden kann.

In einer bevorzugten Ausführungsform weist die Düseneinheit ein Rückschlagventil auf.

In einer bevorzugten Ausführungsform weist die Düseneinheit eine einstellbare Düse auf. Diese kann beispielsweise durch einen kugelförmigen Düseneinsatz, der in einer Aufnahme in der Düseneinheit angeordnet ist, realisiert werden. Durch den Düseneinsatz führt ein Kanal, an dessen nach außen weisenden Ende die Flüssigkeit versprüht wird. Durch die Kugelform des Düseneinsatzes kann die Ausrichtung des durch den Düseneinsatz führenden Kanals eingestellt und damit die Düse eingestellt werden.

In einer bevorzugten Ausführungsform weist die Düseneinheit einen Düsenchip auf. Ein Düsenchip wird beispielsweise in WO 00/12361 A1 beschrieben, deren Inhalt für die Beschreibung der Konstruktion eines Düsenchips im Wege der Bezugnahme in diese Beschreibung aufgenommen wird.

Ferner betrifft die Erfindung einen Wischerarm, der die erfindungsgemäße Anordnung aufweist. In einer bevorzugten Ausführungsform des erfindungsgemäßen Wischerarms liegt im Einbauzustand die Anlagefläche zumindest einer Düseneinheit, vorzugsweise der Mehrzahl der Düseneinheiten, vorzugsweise aller Düseneinheiten an einer korrespondieren Fläche des Wischerarms an. Vorteilhafterweise weist der Wischerarm einen U-förmigen Querschnitt auf oder ein Anbauteil mit einem u-förmigen Querschnitt. Dadurch hat er im Wesentlichen drei Hauptflächen, die sich entlang seiner Längsachse erstrecken: zwei Seitenflanken und eine Grundseite, die mit den Seitenflanken verbunden ist. Dabei definieren die Seitenflanken und die Grundseite einen Innenraum. Bei einem Wischarm mit Anbauteil mit u-förmigem Querschnitt kann der Wischarm einen Grundkörper aufweisen, der aus einem Flacheisen geformt ist.

Gemäß einer vorteilhaften Ausführungsform des erfindungsgemäßen Wischerarms weist der Wischerarm eine Grundseite und zwei Seitenflanken auf, wobei die Grundseite und die Seitenflanken sich in Längsrichtung des Wischerarms erstrecken. Dabei ist die Grundseite mit den Seitenflanken derart verbunden ist, dass der Wischerarm einen im Wesentlichen U-förmigen Querschnitt aufweist und die Grundseite und die Seitenflanken einen Innenraum definieren. Dabei ist die Anordnung im Innenraum angeordnet und die Anlagefläche der mindestens einen Düseneinheit ist an der Fläche einer der zwei Seitenflanken anliegend.

Ferner betrifft die Erfindung eine Verwendung einer Düseneinheit, die als starrer Körper ausgebildet ist und einen Kanal, durch den Flüssigkeit in die Düseneinheit einströmen und/oder aus der Düseneinheit ausströmen kann, eine Düse, die mit dem Kanal verbunden ist, und eine Anlagefläche aufweist, derart, dass sich die Düseneinheit nicht um ihre Längsachse drehen kann, wenn die Anlagefläche an einer Fläche eines Wischerarms anliegt.

Die zu verwendende Düseneinheit kann eines oder mehrere Merkmale einer Düseneinheit aufweisen, die vorstehend im Kontext der Beschreibung der erfindungsgemäßen Anordnung beschrieben wurde.

Die Verwendung umfasst vorzugsweise die Verwendung mehrerer solcher Düseneinheiten zur Bildung einer erfindungsgemäßen Anordnung, wobei insbesondere die Zahl der verwendeten Düseneinheiten auf die Länge des Wischerarms abgestimmt wird.

Die Erfindung betrifft auch eine Düseneinheit, die
- als starrer Körper ausgebildet ist,
- einen Kanal aufweist, durch den Flüssigkeit in die Düseneinheit einströmen und/oder aus der Düseneinheit ausströmen kann und
- eine Düse aufweist, die mit dem Kanal verbunden ist,
und eine Anlagefläche aufweist, die derart ausgebildet ist, dass sich diese Düseneinheit nicht um ihre Längsachse drehen kann, wenn die Anlagefläche an einer Fläche eines Wischerarms anliegt, wobei die Düseneinheit aus einem sich entlang einer Längsachse erstreckenden Grundkörper besteht, durch den der Kanal führt, wobei der Grundkörper Oberflächenabschnitte aufweist, die nicht in Ebenen senkrecht zur Längsachse angeordnet sind und die gebogen ausgeführt sind.

In einer bevorzugten Ausführungsform sind einige, vorzugsweise die Mehrzahl, vorzugsweise alle Oberflächenabschnitte, die gebogen ausgeführt sind, entweder um die Längsachse oder eine Achse parallel zur Längsachse gebogen ausgeführt oder sind Oberflächenabschnitte eines Kegelstumpfs, dessen Längsachse die Längsachse des Grundkörpers ist oder dessen Längsachse parallel zur Längsachse des Grundkörpers ausgeführt ist.

Die Düseneinheit kann eben ausgeführte Oberflächenabschnitt aufweisen, die in Ebenen senkrecht zur Längsachse des Grundkörpers verlaufen. Solche Oberflächenabschnitte können beispielsweise Endflächen sein, die den Grundkörper endseits abschließen.

In einer bevorzugten Ausführungsform ist der Grundkörper mit Ausnahme der an ihm ausgebildeten Anlagefläche um die Längsachse rotationssymmetrisch ausgeführt. Ergänzend oder alternativ weist der Grundkörper mit Ausnahme der ebenen Anlagefläche zumindest überwiegend, vorzugsweise gänzlich nur um die Längsachse gebogene Oberflächenabschnitt auf. Ergänzend oder alternativ weist der Grundkörper mit Ausnahme der ebenen Anlagefläche und in Ebenen senkrecht zur Längsachse angeordneten ebenen Fläche zumindest überwiegend, vorzugsweise gänzlich nur um die Längsachse gebogene Oberflächenabschnitt auf. Ergänzend oder alternativ weist der Grundkörper mit Ausnahme der ebenen Anlagefläche und mit einer Kante in die ebene Anlagefläche übergehenden ebenen Flächen und mit Ausnahme von möglicherweise in Ebenen senkrecht zur Längsachse angeordneten ebenen Fläche zumindest überwiegend, vorzugsweise gänzlich nur um die Längsachse gebogene Oberflächenabschnitt auf.

In einer bevorzugten Ausführungsform entspricht der Teil der Gesamtoberfläche der Düseneinheit, die durch um die Längsachse oder eine Achse parallel zur Längsachse gebogene Oberflächenabschnitte und - soweit vorhanden - durch die Oberflächenabschnitte eines Kegelstumpfs, dessen Längsachse die Längsachse des Grundkörpers ist oder dessen Längsachse parallel zur Längsachse des Grundkörpers ausgeführt ist, gebildet wird, mehr als 40%, vorzugsweise mehr als 50%, vorzugsweise mehr als 60%, vorzugsweise mehr als 70% der Gesamtoberfläche der Düseneinheit. Die Gesamtoberfläche der Düseneinheit wird durch Summe der Flächen aller Oberflächen bestimmt, deren Oberflächennormalen von der Düseneinheit fortweisen (Außenoberflächen). Die Gesamtoberfläche bezieht sich insbesondere auf Gesamtoberfläche der Düseneinheit im ausgebauten Zustand.

Die erfindungsgemäße Düseneinheit kann in der erfindungsgemäßen Anordnung verwendet werden.

Die erfindungsgemäße Düseneinheit kann eines oder mehrere Merkmale einer Düseneinheit aufweisen, die vorstehend im Kontext der Beschreibung der erfindungsgemäßen Anordnung beschrieben wurde.

Nachfolgend wird die Erfindung anhand einer lediglich Ausführungsformen der Erfindung darstellenden Zeichnung näher erläutert. Darin zeigen:
- Fig. 1: eine perspektivische Ansicht einer erfindungsgemäßen Anordnung von Düseneinheiten,
- Fig. 2: eine Draufsicht auf eine Düseneinheit der Anordnung gemäß Fig. 1,
- Fig. 3: eine geschnittene Ansicht der Düseneinheit gemäß Fig. 1,
- Fig. 4: eine perspektivische Ansicht eines Wischarms ohne das tragende

- Fig. 5: Flacheisen aber mit einer Endkappe und einer erfindungsgemäßen Anordnung, eine perspektivische Ansicht des Wischarms gemäß Fig. 4 ohne die Endkappe,
- Fig. 6: eine perspektivische Ansicht der in dem Wischarm gemäß Fig. 4 verbauten erfindungsgemäßen Anordnung,
- Fig. 7: eine perspektivische Ansicht der Endkappe des Wischarm gemäß Fig. 4,
- Fig. 8: eine teilweise geschnittene perspektivische Ansicht des Wischarms gemäß Fig. 4.

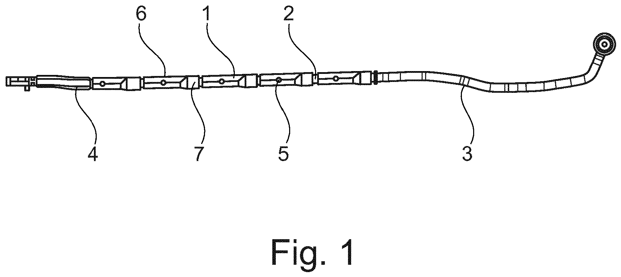

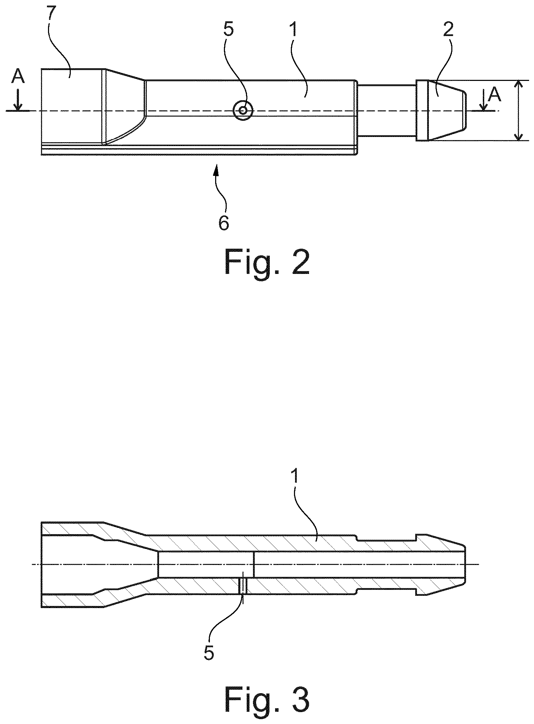

Die Figuren 1 bis 3 zeigen eine beispielhafte Ausführungsform der Anordnung. Die Anordnung weist 5 Düseneinheiten 1 auf, die miteinander in Reihe verbunden sind. In diesem Ausführungsbeispiel sind die Düseneinheiten 1 unmittelbar miteinander verbunden. Dazu weisen die Düseneinheit 1 jeweils ein starres Einfügestück 2 und ein elastisches hohles Gegenstück 7 auf. Das Einfügestück 2 einer Düseneinheit 1 wird in das elastische hohle Gegenstück 7 einer nach der Reihe folgenden Düseneinheit 1 eingefügt. Die Anordnung ist Teil eines Leitungssystems einer Scheibenwischeranlage. Zu diesem Zweck ist sie auf einer Seite mit einem Schlauch 3 zum Zuführen einer Flüssigkeit, insbesondere eines Scheibenreinigers, verbunden und auf der anderen Seite mit einem Schlauchsegment 4 zum Weiterleiten der Flüssigkeit, z. B. zu einer andernorts befestigten Düse.

Jede Düseneinheit 1 weist im vorliegenden Beispiel eine Düse 5 zum Applizieren der Flüssigkeit auf eine Autoscheibe auf. Dabei sind alle Düsen 5 gleich ausgerichtet. Des Weiteren weist jede Düseneinheit 1 eine ebene Anlagefläche 6 auf. Die Anlageflächen 6 dienen dazu an einer Fläche eines Wischerarms (nicht dargestellt) anzuliegen, wodurch die Ausrichtung der Düsen 5 dauerhaft beibehalten werden kann, selbst wenn die Düseneinheiten 1 mit unregelmäßigem und starkem Flüssigkeitsdruck beaufschlagt werden.

In dieser beispielhaften Ausführungsform sind das starre Einfügestück 2 und das elastische hohle Gegenstück 7 derart ausgebildet, dass eine gelenkige Verbindung zwischen zwei aufeinanderfolgenden Düseneinheiten 1 besteht. Insbesondere durch die Elastizität des hohlen Gegenstücks 7 sind die Düseneinheiten 1 kugelgelenkartig miteinander verbunden, was man in der Figur anhand der etwas schrägen Lage der äußerst linken Düseneinheit 1 sehen kann. Dies erlaubt das Anlegen der Anlageflächen 6 an einer Fläche eines Wischerarms, die nicht eben (z. B. gekrümmt) ist.

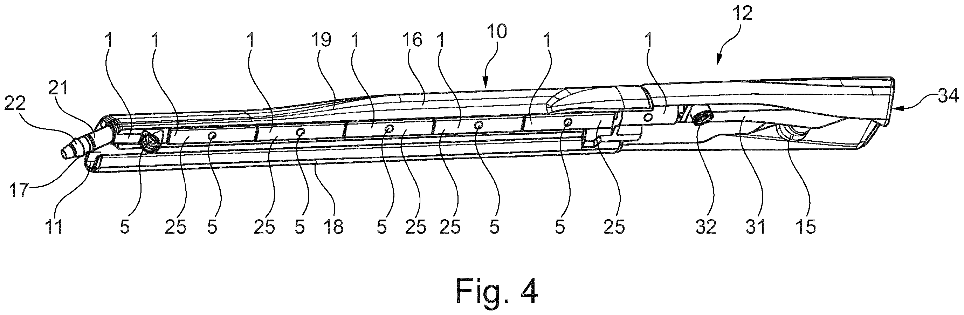

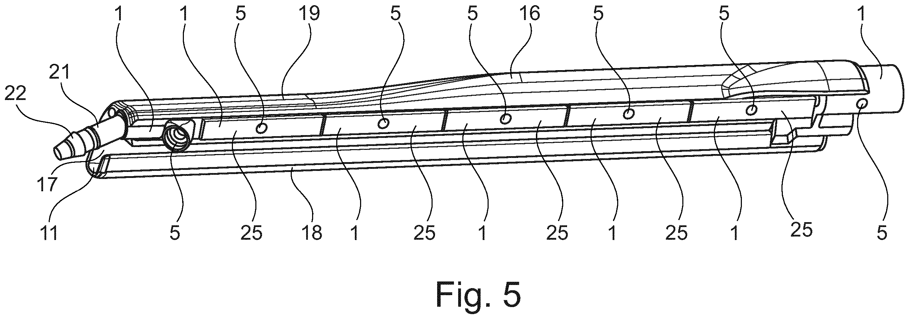

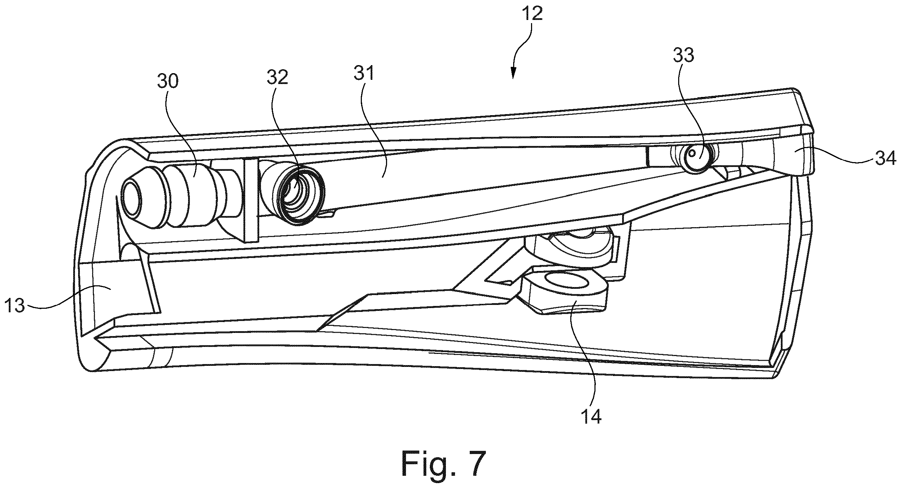

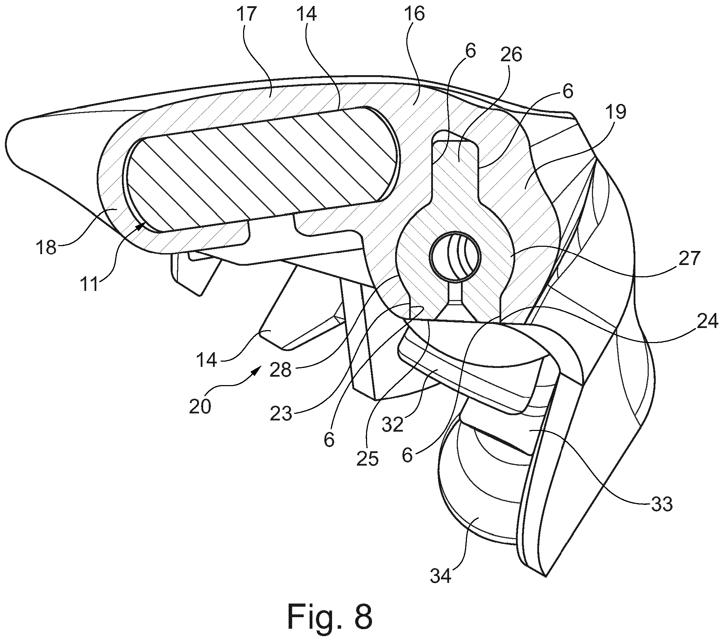

Fig. 4 zeigt eine perspektivische Ansicht eines Wischarms 10. Der Wischarm 10 ist in Fig. 4, 5, 7 ohne das tragende Flacheisen dargestellt, über das der Wischarm 10 mit einem Fahrzeug verbunden wird und das die übrigen Teile des Wischarms 10 trägt und das durch seine Schwenkbewegung die Schwenkbewegung der übrigen Teile des Wischarms 10 bewirkt. In den Fig. 4 und 5 ist eine Aufnahme 11 dargestellt, in die das Flacheisen eingeschoben werden kann. Fig. 7 zeigt, dass auch die Endkappe 12 eine Aufnahme 13 zur Aufnahme des Flacheisens aufweist. Fig. 8 zeigt das Flacheisen 14 in geschnittener Darstellung in der Aufnahme 11.

Ferner nicht dargestellt in den Fig. 4 und 7 ist das Wischblatt. Fig. 4 und 7 zeigen eine Aufnahme 15, die als gelenkige Aufnahme für ein Verbindungsstück eines Wischblatts eingesetzt werden kann, um das Wischblatt schwenkbar in Bezug auf die Endkappe 12 mit den in der Fig. 4 dargestellten Teilen des Wischarms 10 zu verbinden. Ein Wechsel des Wischblatts kann beispielsweise dadurch erfolgen, dass die Endkappe 12 mit dem daran befestigten Wischblatt abgezogen wird. Fig. 5 zeigt einen Wischarm 10 mit abgezogener Endkappe 12. Ein neues Wischblatt mit neuer Endkappe 12 kann dann an die Stelle der abgezogenen Endkappe 12 mit dem verbrauchten Wischblatt gesteckt werden.

Der Wischerarm 10 weist ein Anbauteil 16 auf. Das Anbauteil 16 hat eine Grundseite 17 und zwei Seitenflanken 18, 19 (vgl. Fig. 8). Die die Grundseite 17 und die Seitenflanken 18, 19 erstrecken in Längsrichtung des Wischerarms 10. Die Grundseite 17 und die Seitenflanken 18,19 sind derart ausgeführt, dass das Anbauteil 16 des Wischerarm 10 einen im Wesentlichen U-förmigen Querschnitt aufweist und die Grundseite 17 und die Seitenflanken 18, 19 einen Innenraum 20 definieren.

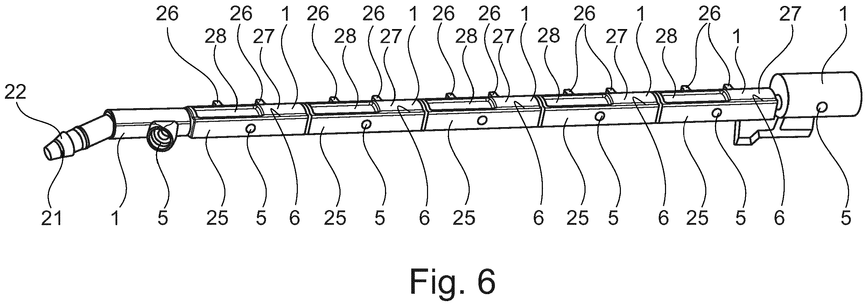

Fig. 6 zeigt die in dem Wischarm 10 verbaute, erfindungsgemäße Anordnung. Die Anordnung weist Düseneinheiten 1 auf. Von diesen Düseneinheiten 1 sind fünf gleichartig ausgeführt. Die Düseneinheiten 1 sind jeweils als als starrer Körper ausgebildet und weisen einen Kanal auf, durch den Flüssigkeit in die jeweilige Düseneinheit 1 einströmen und aus der jeweiligen Düseneinheit 1ausströmen kann. Ferner weist jede Düseneinheit 1 eine Düse 5 aufweist, die mit dem Kanal verbunden ist. Die Düseneinheiten 1 sind derart in Reihe miteinander verbunden sind, dass eine Flüssigkeit von einer Düseneinheit 1 in eine nach der Reihe folgende Düseneinheit 1 fließen kann. Dabei wird die Anordnung über ein in der Fig. 6 rechts dargestelltes Endstück 21 mit einem (nicht dargestellten) Schlauch oder einer anders ausgeführten Flüssigkeitsversorgung verbunden. Das Endstück 21 ist in der in Fig. 6 dargestellten Ausführungsform über ein Kugelgelenk in der dem Endstück 21 unmittelbar nachfolgende Düseneinheit 1 gelagert und kann somit gegenüber der dem Endstück 21 unmittelbar nachfolgenden Düseneinheit 1 verschwenkt werden. Der im Querschnitt widerhakenförmig ausgebildete Kegelstumpf 22 des Endstücks 21 erlaubt ein sicheres Einführen und Verbinden des Endstücks 21 mit einem Schlauch (nicht dargestellt).

Die fünf gleichartig ausgeführten Düseneinheiten 1 weisen jeweils obere, ebene Anlagefläche 6 und einen untere, ebene Anlagefläche 6 auf, die jeweils derart ausgebildet sind, dass sich diese Düseneinheit 1 nicht um ihre Längsachse drehen kann, wenn die jeweilige Anlagefläche 6 an einer ihr zugeordneten Fläche 23, 24 anliegt (vgl. Fig. 8). Die ebenen Anlageflächen 6 gehen über eine Kante in eine ebene Seitenfläche 25 der jeweiligen Düseneinheit 1 über. Auf der jeweiligen Seitenfläche 25 ist der Auslass der jeweiligen Düse 5 ausgeführt.

Fig. 6 und Fig. 8 zeigen, dass mit Ausnahme eines rückseitigen stabilisierenden Fortsatzes 26, an dem ebenfalls Anlageflächen 6 ausgeführt sind, die verbleibenden Oberflächen der fünf gleichartig ausgeführten Düseneinheiten 1 gebogen um die Längsachse der jeweiligen Düseneinheit 1 ausgeführt sind, wie beispielsweise die Oberflächenabschnitte 27, 28, 29.

Fig. 6 zeigt, dass die Übergänge zwischen den Düseneinheiten 1 der Ausführungsform der Fig. 4 bis 8 enger ausgeführt sind, als die Übergänge der gleichartig ausgeführten Düseneinheiten 1 des Ausführungsbeispiels der Fig. 1 bis 3.

Nicht in den Fig. 4 bis 8 dargestellt, aber aus diesen leicht ableitbar ist, dass durch Variation der Geometrie der jeweiligen Düseneinheit 1, insbesondere deren Länge, sowie durch Variation der Art, Geometrie und Anzahl der Düsen 5 sowie deren jeweilige Anordnung auf der Düseneinheit 1 das Sprühbild des Wischarms 10 angepasst werden kann. Auch ist sofort ersichtlich, dass durch Wahl der Anzahl der Düseneinheiten der erfindungsgemäßen Anordnung unterschiedlichen Längen des Wischarms 10 Rechnung getragen werden kann.

Die fünf gleichartig ausgeführten Düseneinheiten 1 der erfindungsgemäßen Anordnung werden in der Darstellung der Fig. 4, 5, 6 rechts durch eine weitere Düseneinheit 1 mit Düse 5 abgeschlossen. Diese letzte Düseneinheit 1 ist als Adapterdüseneinheit ausgeführt. Sie ist dazu ausgeführt, einen Verbindungsstutzen 30 einer Endkappe 12 des Wischarms 10 aufzunehmen. Die Adapterdüseneinheit und der Verbindungsstutzen 30 sind so ausgeführt, dass sie zum einen ein Abziehen der Endkappe 12, beispielsweise für einen Wischblattwechsel erlauben, andererseits aber sowohl ein einfaches Aufschieben einer neuen Endkappe 12 aber auch eine gut dichtende Verbindung zwischen der Adapterdüseneinheit und der Verbindungsstutzen 30 erlauben. Flüssigkeit wird durch die Adapterdüseneinheit und den Verbindungsstutzen 30 in ein Verteilerrohr 31 der Endkappe 12 geleitet und von dort in die Endkappendüsen 32, 33, 34 der Endkappe 12. Die Endkappendüsen 32, 33 sprühen überwiegend senkrecht zu der Längserstreckung eines (nicht dargestellten) Wischblatts, während die Endkappendüse 34 mehrheitlich in Längsrichtung des (nicht dargestellten) Wischblatts sprüht. Die Endkappe 12 kann anstelle der hier konkret dargestellten Bauform auch nach Art der Bauform der Fig. 5 bis 9 der DE 10 2015 015 553 A1 ausgeführt sein, wobei dazu eine zweite Anordnung von Düseneinheiten für eine zweite Zufuhr von Flüssigkeit vorgesehen würde.

## Patentansprüche

1. Anordnung von Düseneinheiten (1) für einen Wischerarm, wobei zumindest eine Düseneinheit (1)
∘ als starrer Körper ausgebildet ist,
∘ einen Kanal aufweist, durch den Flüssigkeit in die Düseneinheit (1) einströmen und/oder aus der Düseneinheit (1) ausströmen kann und
∘ eine Düse (5) aufweist, die mit dem Kanal verbunden ist,
wobei die Düseneinheiten (1) derart in Reihe miteinander verbunden sind, dass eine Flüssigkeit von einer Düseneinheit (1) in eine nach der Reihe folgende Düseneinheit (1) fließen kann,
wobei zumindest eine Düseneinheit (1) eine Anlagefläche (6) aufweist, die derart ausgebildet ist, dass sich diese Düseneinheit (1) nicht um ihre Längsachse drehen kann, wenn die Anlagefläche (6) an einer Fläche eines Wischerarms anliegt,
**dadurch gekennzeichnet, dass** zumindest eine Düseneinheit ein Leitersegment eines Leiters für eine Heizeinheit aufweist, wobei das Leitersegment mindestens einen Anschluss für ein anderes Leitersegment von einer anderen Düseneinheit aufweist.

2. Anordnung nach Anspruch 1, wobei zumindest zwei nach der Reihe aufeinanderfolgende die Düseneinheiten (1) unmittelbar miteinander verbunden sind.

3. Anordnung nach Anspruch 1, wobei zumindest zwei nach der Reihe aufeinanderfolgende Düseneinheiten mittelbar miteinander verbunden sind.

4. Anordnung nach einem der Ansprüche 1 bis 3, wobei zumindest zwei nach der Reihe aufeinanderfolgende Düseneinheiten (1) gelenkig miteinander verbunden sind.

5. Anordnung nach Anspruch 4, wobei eine der zwei Düseneinheiten ein elastisches Einfügestück und die andere ein starres hohles Gegenstück aufweist, wobei das elastisches Einfügestück dazu vorgesehen ist, in das starre hohle Gegenstück einzudringen, um dadurch die gelenkige Verbindung zu erreichen

6. Anordnung nach Anspruch 4, wobei eine der zwei Düseneinheiten ein starres Einfügestück (2) und die andere ein elastisches hohles Gegenstück (7) aufweist, wobei das Einfügestück (2) dazu vorgesehen ist, in das elastische hohle Gegenstück (7) einzudringen, um dadurch die gelenkige Verbindung zu erreichen.

7. Anordnung nach einem der Ansprüche 1 bis 6, wobei alle Düsen (5) die gleiche Ausrichtung aufweisen.

8. Anordnung nach einem der Ansprüche 1 bis 6, wobei zumindest zwei Düsen unterschiedlich ausgerichtet sind.

9. Anordnung nach einem der Ansprüche 1 bis 8, wobei zumindest eine Düseneinheit eine andere Form aufweist als eine andere Düseneinheit.

10. Wischerarm aufweisend eine Anordnung gemäß einem der Ansprüche 1 bis 9.

11. Wischerarm nach Anspruch 10 aufweisend eine Grundseite und zwei Seitenflanken, wobei die Grundseite und die Seitenflanken sich in Längsrichtung des Wischerarms erstrecken und die Grundseite mit den Seitenflanken derart verbunden ist, dass der Wischerarm einen im Wesentlichen U-förmigen Querschnitt aufweist und die Grundseite und die Seitenflanken einen Innenraum definieren, wobei die Anordnung im Innenraum angeordnet ist und die Anlagefläche der mindestens einen Düseneinheit an der Fläche einer der zwei Seitenflanken anliegt.

12. Wischerarm nach Anspruch 10 oder 11 aufweisend eine rinnenförmige Aufnahme für die Anordnung, wobei die Aufnahme derart elastisch verformbar ist, dass die Anordnung in die Aufnahme eingeklipst werden kann.

## Claims

1. Assembly of nozzle units (1) for a wiper arm, wherein at least one nozzle unit (1)
∘ is designed as a rigid body,
∘ has a channel through which liquid can flow into the nozzle unit (1) and/or from the nozzle unit (1) and
∘ has a nozzle (5) which is connected to the channel,
wherein the nozzle units (1) are connected to one another in series in such a manner that a liquid can flow from one nozzle unit (1) into a nozzle unit (1) which follows in the series, wherein at least one nozzle unit (1) has a bearing surface (6) which is designed in such a manner that this nozzle unit (1) cannot turn about its longitudinal axis when the bearing surface (6) rests against a surface of a wiper arm,
**characterised in that** at least one nozzle unit has a conductor segment of a conductor for a heating unit, wherein the conductor segment has at least one connection for another conductor segment from another nozzle unit.

2. Assembly according to claim 1, wherein at least two nozzle units (1) which follow one another in series are directly connected to one another.

3. Assembly according to claim 1, wherein at least two nozzle units which follow one another in sequence are indirectly connected to one another.

4. Assembly according to one of claims 1 to 3, wherein at least two nozzle units (1) which follow one another in series are connected to one another in an articulated manner.

5. Assembly according to claim 4, wherein one of the two nozzle units has an elastic insertion piece and the other has a rigid hollow counterpart, wherein the elastic insertion piece is provided to penetrate the rigid, hollow counterpart, so that the articulated connection is thereby achieved.

6. Assembly according to claim 4, wherein one of the two nozzle units has a rigid insertion piece (2) and the other has an elastic hollow counterpart (7), wherein the insertion piece (2) is provided to penetrate the elastic hollow counterpart (7), so that the articulated connection is thereby achieved.

7. Assembly according to one of claims 1 to 6, wherein all nozzles (5) have the same orientation.

8. Assembly according to one of claims 1 to 6, wherein at least two nozzles are differently oriented.

9. Assembly according to one of claims 1 to 8, wherein at least one nozzle unit has a different shape to another nozzle unit.

10. Wiper arm having an assembly in accordance with one of claims 1 to 9.

11. Wiper arm according to claim 10, having a base side and two side walls, wherein the base side and the side walls extend in the longitudinal direction of the wiper arm and the base side is connected to the side walls in such a manner that the wiper arm has a substantially U-shaped cross section and the base side and the side walls define an interior space, wherein the assembly is arranged in the interior space and the bearing surface of the at least one nozzle unit rests against the surface of one of the two side walls.

12. Wiper arm according to claim 10 or 11 having a conduit-shaped receiving means for the assembly, wherein the receiving means can be elastically deformed in such a manner that the assembly can be clipped into the receiving means.

## Revendications

1. Ensemble d'unités de buses (1) pour un bras d'essuie-glace, dans lequel au moins une
unité de buse (1)
∘ est conçue comme un corps rigide,
∘ présente un canal à travers lequel le liquide peut entrer dans l'unité de buse (1) et/ou sortir de l'unité de buse (1) et
∘ présente une buse (5) qui est reliée au canal,
dans lequel les unités de buses (1) sont reliées en série de telle sorte qu'un liquide peut s'écouler d'une unité de buse (1) dans une unité de buse (1) suivante selon la rangée,
dans lequel au moins une unité de buse (1) présente une surface d'appui (6) qui est conçue de telle sorte que cette unité de buse (1) ne peut pas tourner autour de son axe longitudinal lorsque la surface d'appui (6) est en contact avec une surface d'un bras d'essuie-glace,
**caractérisé en ce qu'**au moins une unité de buse comprend un segment de conducteur d'un conducteur pour une unité de chauffage, le segment de conducteur comprenant au moins une connexion pour un autre segment de conducteur provenant d'une autre unité de buse.

2. Ensemble selon la revendication 1, dans lequel au moins deux unités de buses (1) successives sont directement reliées entre elles.

3. Ensemble selon la revendication 1, dans lequel au moins deux unités de buses successives selon la rangée sont reliées indirectement entre elles.

4. Ensemble selon l'une quelconque des revendications 1 à 3, dans lequel au moins deux unités de buses (1) successives selon la rangée sont reliées entre elles de manière articulée.

5. Ensemble selon la revendication 4, dans lequel l'une des deux unités de buses comprend une pièce d'insertion élastique et l'autre comprend une contrepartie creuse rigide, la pièce d'insertion élastique étant prévue pour pénétrer dans la contrepartie creuse rigide pour réaliser ainsi la liaison articulée.

6. Ensemble selon la revendication 4, dans lequel l'une des deux unités de buses comprend une pièce d'insertion rigide (2) et l'autre comprend une contrepartie creuse élastique (7), la pièce d'insertion (2) étant destinée à pénétrer dans la contrepartie creuse élastique (7) pour réaliser ainsi la liaison articulée.

7. Ensemble selon l'une quelconque des revendications 1 à 6, dans lequel toutes les buses (5) présentent la même orientation.

8. Ensemble selon l'une quelconque des revendications 1 à 6, dans lequel au moins deux buses sont orientées différemment.

9. Ensemble selon l'une quelconque des revendications 1 à 8, dans lequel au moins une unité de buse présente une forme différente d'une autre unité de buse.

10. Bras d'essuie-glace comportant un ensemble selon l'une quelconque des revendications 1 à 9.

11. Bras d'essuie-glace selon la revendication 10, présentant un côté de base et deux flancs latéraux, le côté de base et les flancs latéraux s'étendant dans la direction longitudinale du bras d'essuie-glace et le côté de base étant relié aux flancs latéraux de telle sorte que le bras d'essuie-glace présente une section transversale sensiblement en forme de U et le côté de base et les flancs latéraux définissant un espace intérieur, l'ensemble étant disposé dans l'espace intérieur et la surface d'appui de l'au moins une unité de buse s'appliquant contre la surface de l'un des deux flancs latéraux.

12. Bras d'essuie-glace selon la revendication 10 ou 11, présentant un logement en forme de gouttière pour l'ensemble, le logement étant déformable élastiquement de telle sorte que l'ensemble peut être clipsé dans le logement.
